# EUROPÄISCHE PATENTSCHRIFT

(11) **EP 2 611 595 B1**
(45) Veröffentlichungstag und Bekanntmachung des Hinweises auf die Patenterteilung: **19.04.2017**
(21) Anmeldenummer: 11746546.8
(22) Anmeldetag: 22.08.2011
(51) Int. Cl.: F02M 35/10, B29C 65/02, B29C 65/48, B29C 65/50, B29C 65/56

(54) **LUFTANSAUGROHR**
AIR INTAKE TUBE
TUBE D'ASPIRATION D'AIR

(30) Priorität: 02.09.2010 DE 102010040172
(43) Veröffentlichungstag der Anmeldung: 10.07.2013
(73) Patentinhaber: Mahle International GmbH, 70376 Stuttgart (DE)
(72) Erfinder: GRASS, Uwe, 70569 Stuttgart (DE); KAISER, Sven, Alexander, 71364 Winnenden (DE)
(74) Vertreter: BRP Renaud & Partner mbB Rechtsanwälte Patentanwälte Steuerberater
(86) Internationale Anmeldenummer: PCT/EP2011/064341
(87) Internationale Veröffentlichungsnummer: WO 2012/028481

(56) Entgegenhaltungen:
- EP-A2- 1 777 062
- WO-A1-2005/017429
- DE-A1- 2 509 725
- DE-C1- 10 216 175
- JP-A- H0 596 623
- US-A- 3 284 257

## Beschreibung

Die vorliegende Erfindung betrifft ein Luftansaugrohr, das aus zumindest zwei Kunststoffschalen zusammengesetzt ist, gemäß dem Oberbegriff des Anspruchs 1.

Aus der EP 1 573 195 B1 ist ein gattungsgemäßes Luftansaugrohr bekannt, das aus zwei Kunststoffschalen zusammengesetzt ist. Diese beiden Kunststoffschalen sind zur Herstellung des Kunststoffhohlteils entlang einer Fügeebene über einen jeweiligen Rand miteinander verschweißt, wobei jede der Kunststoffschalen zumindest eine erste und eine zweite Komponente aufweist. Die erste Komponente ist dabei halbrohrförmig ausgebildet, während die zweite Komponente einen Teil eines Faltenbalgs bildet.

Weitere Kunststoffhohlteile sind beispielsweise aus der EP 1 777 061 A2 und aus der EP 1 777 062 A2 bekannt.

Die vorliegende Erfindung beschäftigt sich mit dem Problem, für ein Luftansaugrohr der gattungsgemäßen Art eine verbesserte oder zumindest eine alternative Ausführungsform anzugeben, die sich insbesondere durch geringe Herstellungskosten auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem Luftansaugrohr, das üblicherweise aus zwei Kunststoff(Halb)-Schalen zusammengesetzt ist, die beiden Kunststoffschalen derart auszubilden, dass diese trotz unterschiedlicher Kunststoffkomponenten mit nur einer vordefinierten Schweißtemperatur zuverlässig miteinander verschweißt werden können. Die beiden Kunststoffschalen sind dabei entlang zumindest einer Fügeebene über einen jeweiligen Rand miteinander verschweißt, wobei - wie erwähnt - jede der Kunststoffschalen zumindest eine erste und eine zweite Komponente aufweist. Diese zumindest zwei Komponenten sind dabei aus unterschiedlichen Kunststoffen ausgebildet, wobei der Kunststoff der ersten Komponente eine niedrigere Schmelztemperatur aufweist als der Kunststoff der zweiten Komponente. Erfindungsgemäß erstreckt sich nun die erste Komponente mit der niedrigeren Schmelztemperatur an zumindest einer Kunststoffschale raupenartig entlang zumindest eines Teils des Randes der Fügeebene der zweiten Komponente dieser Kunststoffschale. Zum miteinander Verschweißen der beiden Kunststoffschalen muss nun lediglich zumindest eine der beiden Kunststoffschalen am Rand auf die Schmelztemperatur der ersten Komponente erhitzt und anschließend mit der zweiten Kunststoffschale verpresst werden. Das Erhitzen zumindest einer, vorzugsweise beider Kunststoffschalen am Rand der Fügeebene auf die Schmelztemperatur der ersten Komponente bewirkt, dass sich die raupenartig entlang des Randes der Fügeebene der zweiten Komponente erstreckende erste Komponente in der Art einer Klebe-/Schweißraupe erhitzt und dadurch schmilzt, wodurch eine dichte und feste Verbindung mit der zugehörigen anderen Kunststoffschale durch ein Verpressen und anschließendes Erkalten erreicht werden kann. Im Unterschied zu bisher bekannten Kunststoffhohlteilen, bei welchen die beiden Kunststoffschalen aufgrund ihrer jeweiligen komponentenabhängigen Schmelztemperaturen an unterschiedlichen Bereichen unterschiedlich stark erwärmt werden mussten, kann dies bei den erfindungsgemäßen Kunststoffschalen unterbleiben, so dass diese zum Verschweißen lediglich entlang des Randes der Fügeebene auf die Schmelztemperatur der ersten Komponente erhitzt werden müssen, um dadurch dicht und fest miteinander verschweißt werden zu können. Da die Schmelztemperatur der ersten Komponente unterhalb der Schmelztemperatur der zweiten Komponente liegt, kann das Verschweißen der beiden Kunststoffschalen bei einer vergleichsweise niedrigen Temperatur, das heißt der Schmelztemperatur der ersten Komponente erfolgen, so dass negative Temperatureinflüsse auf die zweite Komponente zuverlässig ausgeschlossen werden können. Bei den erfindungsgemäßen Kunststoffschalen kann im Vergleich zu bisher bekannten Kunststoffschalen, die zum Verschweißen unterschiedlich stark erhitzt werden müssen, auch ein Verbrennen der ersten Komponente im Übergangsbereich zwischen dieser und der zweiten Komponente vermieden werden, da der gesamte zu fügende Rand der Kunststoffschale lediglich auf die Schmelztemperatur ersten Komponente erhitzt wird. Ein Erhitzen der zweiten Komponente auf deren höhere Schmelztemperatur ist beim erfindungsgemäßen Luftansaugrohr zum zuverlässigen Verschweißen der beiden Kunststoffschalen miteinander nicht erforderlich. Hierdurch lässt sich insbesondere die Montage der beiden Kunststoffschalen, das heißt der Fertigungsprozess des Luftansaugrohrs einfacher und damit kostengünstiger realisieren. Selbstverständlich kann dabei das Luftansaugrohr nahezu sämtliche Querschnittsformen, Durchmesser oder geometrische Gestalten aufweisen.

Bei einer vorteilhaften Weiterbildung der erfindungsgemäßen Lösung, weist zumindest ein Rand der Fügeebene eine Sägezahnkontur auf, wodurch eine größere Verbindungsoberfläche geschaffen und dadurch die dichte Verbindung der beiden Kunststoffschalen miteinander noch zuverlässiger gestaltet werden kann. Dabei kann die sich erfindungsgemäß entlang des Randes der Fügeebene erstreckende erste Komponente nur an einer Kunststoffschale oder aber auch an beiden Kunststoffschalen vorgesehen sein, wogegen die Sägezahnkontur ebenfalls an lediglich einer oder an beiden Kunststoffschalen angeordnet sein kann. Selbstverständlich lässt sich die vergrößerte Oberfläche auch durch andere Geometrien, wie beispielsweise Nuten, Nadeln, Dorne, Grate oder Durchgangsöffnungen erreichen, wobei insbesondere bei den Nuten abgerundete Eckbereiche vorgesehen sind, um einen Einschluss von Luftblasen zu vermeiden. Ein derartiger Einschluss von Luft verhindert oder vermindert zumindest eine Adhäsion, wodurch die Verbindung an dieser Stelle geschwächt und die Dichtigkeit der beiden Kunststoffschalen beeinträchtigt werden kann. Bei den Durchgangsöffnungen kann vorgesehen sein, dass sich beim Verschweißen der beiden Kunststoffschalen die erste Komponente der beiden Kunststoffschalen durch die zumindest eine Durchgangsöffnung hindurch verformt und darin erstarrt oder aber durch ein entsprechendes Werkzeug ein auf der abgewandten Seite des Randes austretender Teil der ersten Komponente plastisch verformt und dadurch ein Kopf gebildet wird, der ebenfalls eine zuverlässige Verbindung der beiden Kunststoffschalen miteinander gewährleistet. Das Vorsehen zumindest eines Grats, einer Nadel und/oder eines Dorns hat den großen Vorteil, dass sich ein freies Ende dieses Grats/Dorns bzw. der Nadel beim Verschweißen der beiden Kunststoffschalen aufgrund seiner/ihrer geringen geometrischen Abmessungen so stark erwärmt, dass sich dieses plastisch verformt und einen Kopf bildet, der von der raupenartigen ersten Komponente umschlossen wird. Hierdurch kann ebenfalls eine besonders zuverlässige hinterschnittartig wirkende Verbindung zwischen der ersten Komponente und dem Rand der zweiten Komponente geschaffen werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Kunststoffschale, die zusammen mit einer weiteren, nicht gezeigten Kunststoffschale zu einem Kunststoffhohlteil, insbesondere einem Luftansaugrohr, zusammensetzbar ist,
- Fig. 2a bis c: eine Schnittdarstellung durch einen Rand einer Fügeebene der Kunststoffschale mit unterschiedlich ausgebildeten Geometrien,
- Fig. 3a bis c: eine ähnliche Darstellung wie in den Fig. 2, jedoch mit unterschiedlichen Konturen,
- Fig. 4: ein Rand der Fügeebene mit einer Durchgangsöffnung,
- Fig. 5a: eine gratartige Kontur am Rand der Fügeebene vor dem Verschmelzen,
- Fig. 5b: eine Darstellung wie in Fig. 5a, jedoch nach dem Verbinden der zwei Kunststoffschalen.

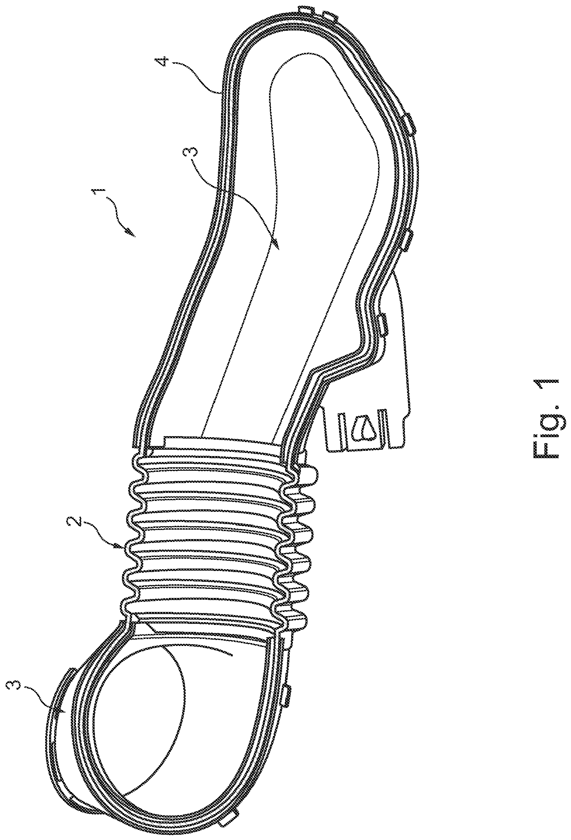

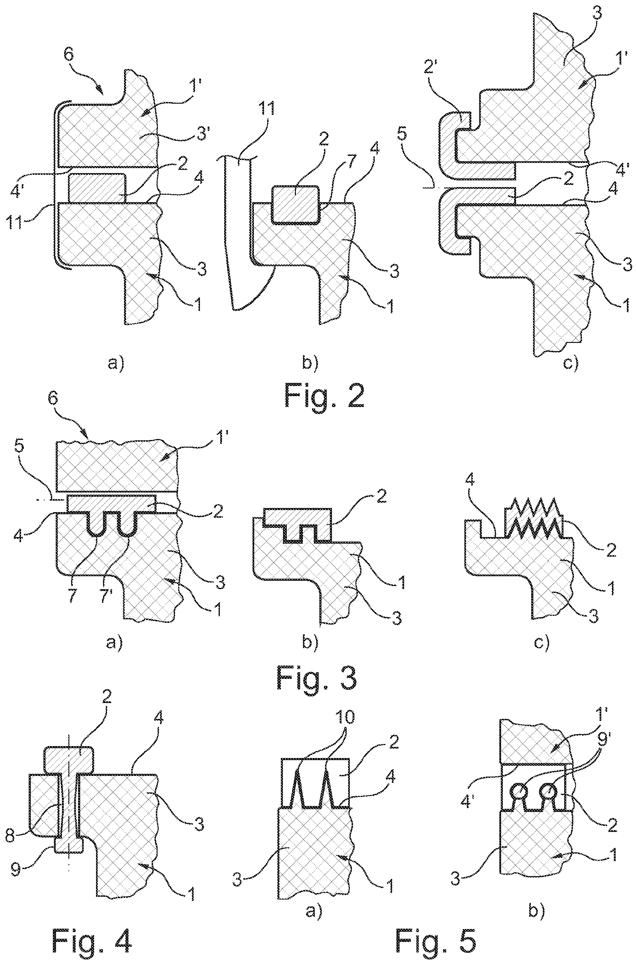

Entsprechend der Fig. 1, weist eine erfindungsgemäße Kunststoffschale 1, die als Teil eines Luftansaugrohrs für einen Ansaugtrakt eines Verbrennungsmotors ausgebildet ist, zumindest eine erste Komponente 2 sowie eine damit verbundene, insbesondere verschweißte, zweite Komponente 3 auf. Gemäß der Darstellung in Fig. 1 weist die erfindungsgemäße Kunststoffschale 1 zwei zweite Komponenten 3 auf, zwischen welchen die erste Komponente 2 in Form eines Faltenbalgs angeordnet ist. Die beiden Komponenten 2 und 3 sind dabei aus unterschiedlichen Kunststoffen ausgebildet, wobei der Kunststoff der ersten Komponente 2 eine niedrigere Schmelztemperatur aufweist, als der Kunststoff der zweiten Komponente 3. Betrachtet man die Fig. 1 genauer, so kann man erkennen, dass sich die erste Komponente 2 mit der niedrigeren Schmelztemperatur raupenartig entlang eines Randes 4 einer Fügeebene 5 (vgl. auch die Fig. 2 und 3) der zweiten Komponenten 3 der Kunststoffschale 1 erstreckt. Zumindest zwei dieser Kunststoffschalen 1, 1', die beispielsweise als Gleichteile ausgebildet sein können, ergeben in fertig miteinander verschweißtem Zustand ein eingangs erwähntes Luftansaugrohr eines Verbrennungsmotors, wobei die erste Komponente 2 einen flexiblen Bereich dieses Luftansaugrohrs darstellt. Durch die erfindungsgemäß sich entlang des Randes 4 der zweiten Komponente 3 erstreckende ersten Komponente 2, die eine im Vergleich zur zweiten Komponente 3 geringere Schmelztemperatur aufweist, ist ein miteinander Verschweißen der zumindest zwei Kunststoffschalen 1, 1' zu einem fertigen Kunststoffhohlteil 6 (vgl. die Fig. 2 und 3) denkbar einfach, da zum Verschweißen die Kunststoffschalen 1,1' an ihrem Rand 4,4' lediglich auf die Schmelztemperatur des Kunststoffs der ersten Komponente 2 erhitzt werden müssen, um eine zuverlässige und dichte Schweißverbindung herstellen zu können.

Bislang mussten die einzelnen Komponenten 2, 3 jeweils auf ihre individuelle Schmelztemperatur erhitzt werden, was insbesondere im Übergangsbereich zwischen den beiden Komponenten 2, 3 zu einem entweder ungenügenden Aufschmelzen der zweiten Komponente 3 oder einem Verbrennen der ersten Komponente 2 führen konnte. Dies ist mit dem erfindungsgemäß ausgebildeten Kunststoffhohlteil 6 bzw. den Kunststoffschalen 1,1' zu vermeiden.

Betrachtet man die Fig. 2a, so kann man erkennen, dass die sich entlang des Randes 4 der Kunststoffschale 1 raupenartig entlang erstreckende ersten Komponente 2 im wesentlichen flächig auf dem Rand 4 der ersten Kunststoffschale aufliegt, wogegen gemäß der Fig. 2b am Rand 4 der Kunststoffschale 1 zusätzlich eine Nut 7 vorgesehen ist, die die erste Komponente 2 zumindest teilweise aufnimmt. Die Eckbereiche der Nut 7 sind dabei vorzugsweise zumindest leicht abgerundet ausgebildet, um insbesondere den Einschluss von die Dichtigkeit beeinträchtigen Luftblasen zuverlässig ausschließen zu können.

Bei der Ausgestaltung gemäß der Fig. 2c umgreift die sich raupenartig entlang des Randes 4 der Fügeebene 5 erstreckende erste Komponente 2 den Rand 4 der zugehörigen zweiten Komponente 3 und gewährleistet dadurch die gute und dichte Verbindung der beiden Kunststoffschalen 1 und 1'. Dabei kann die erste Komponente 2 nur an einer der beiden Kunststoffschalen 1,1' oder aber auch an beiden Kunststoffschalen angeordnet sein, wie dies beispielhaft in Fig. 2c durch eine erste Komponente 2' gezeigt ist. Dabei kann die Form der gemäß der Figur 2 gezeigten ersten Komponenten 2,2' selbstverständlich auch die Form der in den anderen Figuren gezeigten ersten Komponenten 2 aufweisen.

Selbstverständlich kann der Rand 4 der Kunststoffschale 1 und/oder auch der Rand 4' der Kunststoffschale 1' nicht nur eine Nut 7 aufweisen, sondern beispielsweise mehrere Nuten 7, 7', wie dies beispielsweise gemäß den Fig. 3a und 3b gezeigt ist, oder aber eine Sägezahnstruktur (vgl. Fig. 3c), wobei sämtliche derartige Konturen eine Verbindungsoberfläche zwischen dem Rand 4 der zweiten Komponente 3 und der ersten Komponente 2 vergrößern.

Denkbar ist auch, dass der Rand 4 an der Fügeebene 5 der zweiten Komponente 3 zumindest eine Durchgangsöffnung 8 aufweist, wie diese beispielsweise gemäß der Fig. 4 gezeigt ist, so dass sich die erste Komponente 2 beim Verschweißen der beiden Kunststoffschalen 1 und 1' durch die zumindest eine Durchgangsöffnung 8 hindurch verformt und darin erstarren kann. Denkbar ist auch, dass mit einem entsprechenden, nicht gezeigten Werkzeug an einer gegenüberliegenden Seite des Randes 4 ein Kopf 9 an die erstarrende erste Komponente 2 angeformt wird, wodurch ein besonders gutes Verbinden der ersten Komponente 2 mit der zweiten Komponente 3 erreicht werden kann.

Gleichfalls vorstellbar ist, dass an zumindest einem Rand 4,4' der zweiten Komponente 3 Grate 10, Nadeln und/oder Dorne angeordnet sind, wie diese beispielsweise gemäß den Fig. 5a und 5b gezeigt sind, wobei ein freies Ende des zumindest einen Grats 10 Dorns beim Verschweißen der beiden Kunststoffschalen 1 und 1' so stark erhitzt wird, dass sich dieses freie Ende plastisch verformt und einen Kopf 9' bildet, der von der raupenartigen ersten Komponente 2 beim Verschweißen umschlossen und damit fixiert wird. Selbstverständlich können die beiden das Kunststoffhohl 6 bildenden Kunststoffschalen 1 und 1' zusätzlich durch ein Befestigungselement 11 (vgl. Fig. 2a und 2b), beispielsweise durch einen Bügel, eine Clipsverbindung oder eine Schraube, aneinander fixiert werden.

Mit der erfindungsgemäßen Kunststoffschale 1 ist es somit möglich, das Verschweißen zumindest zweier dieser Kunststoffschalen 1 und 1' zu einem Kunststoffhohlteil 6, beispielsweise einem Luftansaugkanal, deutlich zu vereinfachen, da die Kunststoffschale 1 zum Verschweißen lediglich am Rand 4 gleichmäßig auf die Schmelztemperatur der ersten Komponente 2 erhitzt werden muss. Insbesondere lässt sich durch die erfindungsgemäße Kunststoffschale 1, 1' ein Verbrennen der ersten Komponente 2 durch ein zu starkes Erhitzen und damit das Herstellen einer lediglich undichten Verbindung der beiden Kunststoffschalen 1 und 1' zuverlässig vermeiden.

## Patentansprüche

1. Luftansaugrohr, insbesondere für einen Verbrennungsmotor, das aus zumindest zwei Kunststoffschalen (1,1') zusammengesetzt ist,
- wobei die Kunststoffschalen (1,1') entlang zumindest einer Fügeebene (5) über einen jeweiligen Rand (4,4') miteinander verbunden, insbesondere verschweißt sind,
- wobei jede Kunststoffschale (1,1') zumindest eine erste Komponente (2) und eine zweite Komponente (3) aufweist,
- wobei die beiden Komponenten (2,3) aus unterschiedlichen Kunststoffen ausgebildet sind, wobei der Kunststoff der ersten Komponente (2) eine niedrigere Schmelztemperatur aufweist, als der Kunststoff der zweiten Komponente (3),
**dadurch gekennzeichnet,**
**dass** sich die erste Komponente (2) mit der niedrigeren Schmelztemperatur an zumindest einer Kunststoffschale (1,1') raupenartig entlang zumindest eines Teils des Rands (4,4') der zweiten Komponente (3) dieser Kunststoffschale (1,1') erstreckt.

2. Luftansaugrohr nach Anspruch 1,
**dadurch gekennzeichnet,**
**dass** die erste Komponente (2) als Teil eines Faltenbalgs und die zweite Komponente (3) halbrohrförmig ausgebildet sind.

3. Luftansaugrohr nach einem der Ansprüche 1 oder 2,
**dadurch gekennzeichnet,**
**dass** zumindest ein Rand (4,4') zumindest eine Nut (7,7'), einen Grat (10,10'), einen Dorn, eine Nadel, eine Sägezahnkontur und/oder eine Durchgangsöffnung (8) aufweist.

4. Luftansaugrohr nach Anspruch 3,
**dadurch gekennzeichnet,**
**dass** die zumindest eine Nut (7,7') abgerundete Eckbereiche aufweist.

5. Luftansaugrohr nach einem der Ansprüche 1 bis 4,
**dadurch gekennzeichnet,**
**dass** die sich raupenartig entlang zumindest eines Teils des Rands (4,4') der Fügeebene (5) erstreckende erste Komponente (2) den Rand (4,4') der zugehörigen zweiten Komponente (3) umgreift.

6. Luftansaugrohr nach einem der Ansprüche 1 bis 5,
**dadurch gekennzeichnet,**
- **dass** die Schmelztemperatur der ersten Komponente (2) ca. 240 - 260°C und die Schmelztemperatur der zweiten Komponente (3) ca. 280°C beträgt, und/oder
- **dass** die beiden Kunststoffschalen (1,1') als Gleichteile ausgebildet sind.

7. Luftansaugrohr nach einem der Ansprüche 3 bis 6,
**dadurch gekennzeichnet,**
**dass** ein freies Ende des zumindest einen Grats (10,10') beim Verschweißen der beiden Kunststoffschalen (1,1') plastisch verformt und einen Kopf (9) bildet, der von der raupenartigen ersten Komponente (2) umschlossen ist.

8. Luftansaugrohr nach einem der Ansprüche 3 bis 7,
**dadurch gekennzeichnet,**
**dass** sich die erste Komponente (2) beim Verschweißen der beiden Kunststoffschalen (1,1') durch die zumindest eine Durchgangsöffnung (8) hindurchverformt verformt und darin erstarrt.

9. Luftansaugrohr nach einem der Ansprüche 1 bis 8,
**dadurch gekennzeichnet,**
**dass** zumindest ein Befestigungselement (11), insbesondere ein Clipselement und/oder eine Schraube zum Fixieren der beiden Kunststoffschalen (1,1') aneinander vorgesehen ist.

## Claims

1. An air intake manifold, especially for a combustion engine, which is composed of at least two plastic shells (1, 1'),
- wherein the plastic shells (1, 1') are connected with one another, in particular welded, over a respective edge (4, 4') along at least one joining plane (5),
- wherein each plastic shell (1, 1') has at least a first component (2) and a second component (3),
- the two components (2, 3) are formed from different plastics, wherein the plastic of the first component (2) has a lower melting temperature than the plastic of the second component (3),
**characterized in that**
the first component (2) with the lower melting temperature extends on at least one plastic shell (1, 1') in a caterpillar-like manner along at least part of the edge (4, 4') of the second component (3) of this plastic shell (1, 1').

2. The air intake manifold according to Claim 1,
**characterized in that**
the first component (2) is constructed as part of a bellows and the second component (3) is constructed in the form of a half pipe.

3. The hollow plastic part according to Claim 1 or 2,
**characterized in that**
at least one edge (4, 4') has at least one groove (7, 7'), a ridge (10, 10'), a pin, a needle, a saw tooth contour and/or a through-opening (8).

4. The air intake manifold according to Claim 3,
**characterized in that**
the at least one groove (7, 7') has rounded corner regions.

5. The air intake manifold according to one of Claims 1 to 4,
**characterized in that**
the first component (2), extending in a caterpillar-like manner along at least part of the edge (4, 4') of the joining plane (5) surrounds the edge (4, 4') of the associated second component (3).

6. The air intake manifold according to one of Claims 1 to 5,
**characterized in that**
- the melting temperature of the first component (2) is approximately 240 - 260°C and the melting temperature of the second component (3) is approximately 280°C,
and/or
- the two plastic shells (1, 1') are constructed as identical parts.

7. The hollow plastic part according to one of Claims 3 to 6,
**characterized in that**
a free end of the at least one ridge (10, 10') deforms in a plastic manner on welding of the two plastic shells (1, 1') and forms a head (9), which is surrounded by the caterpillar-like first component (2).

8. The hollow plastic part according to one of Claims 3 to 7,
**characterized in that**
on welding of the two plastic shells (1, 1'), the first component (2) deforms through the at least one through-opening (8) and solidifies therein.

9. The hollow plastic part according to one of Claims 1 to 8,
**characterized in that**
at least one fastening element (11), in particular a clip element and/or a screw is provided for fixing the two plastic shells (1, 1') to one another.

## Revendications

1. Tube d'aspiration d'air, en particulier pour un moteur à combustion interne, qui se compose d'au moins deux coques en plastique (1, 1'),
- dans lequel les coques en plastique (1, 1') sont reliées l'une à l'autre, en particulier soudées, le long d'au moins un plan de joint (5) par le biais d'un bord (4, 4') respectif,
- dans lequel chaque coque en plastique (1, 1') présente au moins un premier composant (2) et un deuxième composant (3),
- dans lequel les deux composants (2, 3) sont réalisés en différents plastiques, dans lequel le plastique du premier composant (2) présente une température de fusion inférieure à celle du plastique du deuxième composant (3),
**caractérisé en ce**
**que** le premier composant (2) avec la température de fusion la plus faible s'étend au niveau d'au moins une coque en plastique (1, 1') à la manière d'une chenille le long d'au moins une partie du bord (4, 4') du deuxième composant (3) de cette coque en plastique (1, 1').

2. Tube d'aspiration d'air selon la revendication 1,
**caractérisé en ce**
**que** le premier composant (2) est réalisé comme partie d'un soufflet et le deuxième composant (3) est réalisé en forme de demi-tube.

3. Tube d'aspiration d'air selon l'une quelconque des revendications 1 ou 2,
**caractérisé en ce**
**qu'**au moins un bord (4, 4') présente au moins une rainure (7, 7'), une arête (10, 10'), un mandrin, une aiguille, un contour en dents de scie et/ou une ouverture traversante (8).

4. Tube d'aspiration d'air selon la revendication 3,
**caractérisé en ce**
**que** l'au moins une rainure (7, 7') présente des zones de coin arrondies.

5. Tube d'aspiration d'air selon l'une quelconque des revendications 1 à 4,
**caractérisé en ce**
**que** le premier composant (2) s'étendant à la manière d'une chenille le long d'au moins une partie du bord (4, 4') du plan de joint (5) entoure le bord (4, 4') du deuxième composant (3) correspondant.

6. Tube d'aspiration d'air selon l'une quelconque des revendications 1 à 5,
**caractérisé en ce**
- **que** la température de fusion du premier composant (2) est d'environ 240-260 °C et la température de fusion du deuxième composant (3) est d'environ 280 °C, et/ou
- **que** les deux coques en plastique (1, 1') sont réalisées sous forme de pièces identiques.

7. Tube d'aspiration d'air selon l'une quelconque des revendications 3 à 6,
**caractérisé en ce**
**qu'**une extrémité libre de l'au moins une arête (10, 10') est déformée plastiquement lors du soudage des deux coques en plastique (1, 1') et forme une tête (9), qui est entourée par le premier composant (2) en forme de chenille.

8. Tube d'aspiration d'air selon l'une quelconque des revendications 3 à 7,
**caractérisé en ce**
**que** le premier composant (2) est déformé lors du soudage des deux coques en plastique (1, 1') par l'au moins une ouverture transversale (8) et s'y solidifie.

9. Tube d'aspiration d'air selon l'une quelconque des revendications 1 à 8,
**caractérisé en ce**
**qu'**au moins un élément de fixation (11), en particulier un élément clip et/ou une vis est prévu pour la fixation des deux coques en plastique (1, 1') l'une à l'autre.
